# EUROPÄISCHE PATENTSCHRIFT

(11) **EP 3 483 118 B1**
(45) Veröffentlichungstag und Bekanntmachung des Hinweises auf die Patenterteilung: **24.02.2021**
(21) Anmeldenummer: 18204334.9
(22) Anmeldetag: 05.11.2018
(51) Int. Cl.: C01B 25/36

(54) **WÄSSRIGE LÖSUNG ENTHALTEND ALUMINIUMIONEN, LAKTATIONEN UND PHOSPHATIONEN SOWIE VERFAHREN ZU DEREN HERSTELLUNG**
AQUEOUS SOLUTION CONTAINING ALUMINIUM IONS, LACTATE IONS AND PHOSPHATE IONS AND METHOD FOR THE PRODUCTION THEREOF
SOLUTION AQUEUSE CONTENANT DES IONS D'ALUMINIUM, DES IONS DE LACTATE ET DES IONS DE PHOSPHATE AINSI QUE SON PROCÉDÉ DE PRODUCTION

(30) Priorität: 10.11.2017 DE 102017126334
(43) Veröffentlichungstag der Anmeldung: 15.05.2019
(73) Patentinhaber: Dr. Paul Lohmann GmbH & Co. KGaA, 31860 Emmerthal (DE)
(72) Erfinder: GÜNTHER, Dr., Uwe, 31787 Hameln (DE); SCHWEDER, Carsten, 31785 Hameln (DE); FURDIK, Mikulas, 84215 Bratislava (SK); HARCARIK, Jozef, 84101 Bratislava (SK)
(74) Vertreter: Hannke, Christian

(56) Entgegenhaltungen:
- CN-A- 105 603 440
- JP-A- S5 867 644
- LONG ZHANG, CARLA C. DE ARAUJO, HELLMUT ECKERT: "Aluminum lactate - An attractive precursor for sol-gel synthesisof alumina-based glasses", JOURNAL OF NON-CRYSTALLINE SOLIDS, Bd. 353, 26. März 2007 (2007-03-26), Seiten 1255-1260, XP002790383, DOI: 10.1016/j.jnoncrysol.2006.10.065
- LONG ZHANG AND HELLMUT ECKERT: "Sol-gel synthesis of Al2O3-P2O5 glasses: mechanistic studies bysolution and solid state NMR", J . M A T E R . C H E M ., Bd. 14, 22. April 2004 (2004-04-22), Seiten 1605-1615, XP002790384, DOI: 10.1039/b400651h

## Beschreibung

Die Erfindung betrifft eine stabile wässrige Lösung enthaltend Aluminiumionen, Laktationen und Phosphationen. Weiterhin betrifft die Erfindung ein Verfahren zur Herstellung einer stabilen wässrigen Lösung, die Aluminiumionen und Phosphationen enthält.

Aus dem Stand der Technik ist bekannt, dass Aluminiumphosphat nicht oder nur in äußerst geringen Mengen wasserlöslich ist. Wässrige Lösungen, die sowohl Aluminium- als auch Phosphationen enthalten, sind maximal temporär stabil und werden z. B. hergestellt, um daraus Aluminiumphosphat AlPO₄ zu fällen. Ein Beispiel für eine solche lediglich temporär stabile Lösung, die Aluminium- und Phosphationen enthält, ist in der DE 2306354 offenbart.

In verschiedenen industriellen Bereichen besteht jedoch Bedarf an wässrigen Lösungen, die sowohl Aluminium- als auch Phosphationen in nennenswerten Mengenanteilen enthalten. Anwendungsgebiete sind beispielsweise der Einsatz in Kunststoffen, Klebstoffen, Lacken, der Abwasserbehandlung oder als Flockungsmittel. Ein besonders interessanter Bereich, in dem derartige Lösungen nachgefragt werden, ist die Herstellung von Superabsorbern. Der Zusatz von wasserunlöslichen Phosphaten zu Superabsorbern ist beispielsweise in der WO 02/060983 A2 beschrieben. Wie beispielsweise aus der WO 2013/076031 A1 hervorgeht, werden Phosphorsäure oder Phosphorigsäure sowie daraus erhaltene Substanzen, wie beispielsweise Salze, Ester und andere als Chelatbilder in Monomermischungen verwendet, die zur Synthese von Superabsorbern verwendet werden. Auch als Reduktionsmittel werden Salze und Ester der Phosphorsäure und Phosphorigsäure verwendet. Weiterhin beschreibt die oben genannte Patentanmeldung, dass durch pyrogenes Aluminiumoxid das Verbacken des Superabsorbers verhindert oder zumindest reduziert werden kann. Als eine bevorzugte Ausführungsform ist beschrieben, dass polyvalente Kationen auf die Partikeloberfläche aufgebracht werden, um eine zusätzliche Oberflächenvernetzung erreichen zu können. Als Beispiele für geeignete polyvalente Kationen sind Aluminiumionen genannt.

Es wäre vorteilhaft, wenn dazu Lösungen bereitstünden, die sowohl Aluminium- als auch Phosphationen enthalten würden. Aus dem Stand der Technik sind derartige Lösungen, die eine ausreichende Lagerstabilität aufweisen, jedoch nicht bekannt. Aus Lösungen, die diese beiden Ionen enthalten, fällt Aluminiumphosphat üblicherweise in kürzester Zeit aus, so dass diese Lösungen lediglich zur Herstellung (z. B. durch Fällung) oder Reinigung von Aluminiumphosphat verwendet werden können.

LONG ZHANG, CARLA C. DE ARAUJO, HELLMUT ECKERT: "Aluminum lactate - An attractive precursor for sol-gel synthesis of alumina-based glasses", JOURNAL OF NON-CRYS-TALLINE SOLIDS, Bd. 353, 26. März 2007 (2007-03-26), Seiten 1255-1260, XP002790383, DOI: 10.1016/j.jnoncrysol.2006.10.065 beschreibt eine Synthese von aluminium-haltigen Gelen und Gläsern mittels eines Sol-Gel-Prozesses ausgehend von einer wässrigen Aluminiumlaktat-Lösung.

LONG ZHANG AND HELLMUT ECKERT: "Sol-gel synthesis of Al203-P205 glasses: mechanistic studies bysolution and solid state NMR", J.MATER.CHEM., Bd. 14, 22. April 2004 (2004-04-22), Seiten 1605-1615, XP002790384, DOI: 10.1039/b400651h zeigt ebenfalls eine Synthese von aluminium-haltigen Gelen und Gläsern mittels eines Sol-Gel-Prozesses durch Zugabe von Aluminiumlaktat zu wässriger Phosphorsäure.

CN 105 603 440 A offenbart ein Reinigungsmittel für Druckmaschinen zum Bedrucken von Platten aus einer Aluminiumlegierung, enthaltend unter anderem Aluminiumkaliumsulfat, Phosphorsäure und Kaliumlactat.

JP S58 67644 A beschreibt ein Verfahren zur Stabilisierung von basischem Aluminiumlaktat ausgehend von Al₂O₃ und einer anorganischen Säure bzw. dessen Salzen.

Eine Aufgabe der vorliegenden Erfindung ist es daher, eine stabile wässrige Lösung bereitzustellen, die sowohl Aluminiumionen als auch Phosphationen enthält.

Überraschenderweise konnte diese Aufgabe durch eine wässrige Aluminiumionen enthaltende Lösung gemäß Anspruch 1 gelöst werden. Diese zeichnet sich dadurch aus, dass die Lösung Aluminiumionen in einem Anteil im Bereich von 1,5 - 15 Gewichts-% (ggf. umgerechnet auf Al³⁺) bezogen auf die Gesamtmasse der Lösung umfasst und weiterhin Anionen der Milchsäure (Laktat-Ionen) und der Phosphorsäure (Phosphat-Ionen) umfasst, wobei der molare Anteil der Laktat-Ionen im Bereich des 0,01 - 2,99-fachen bezogen auf den molaren Anteil an Al³⁺ ist und der molare Anteil der Phosphat-Ionen im Bereich des 0,01 - 2,99-fachen bezogen auf den molaren Anteil an Al³⁺ ist. Mengenanteile für die mit Ladung angegebenen Ionen beziehen sich dabei jeweils auf die Ionen selbst, so dass beispielsweise als Oxide (z.B. Al₂O₃) bestimmte oder dazu umgerechnete Mengenanteile auf die Ionen umzurechnen sind. Durch das zusätzlich zu Aluminiumionen und Phosphationen enthaltene Laktat kann eine stabile Lösung erhalten werden. Zusätzlich zu Laktat und Phosphat können auch andere Anionen in der Lösung enthalten sein. Das Vorhandensein von Laktat scheint jedoch für die Stabilisierung der aluminium- und phosphathaltigen Lösung zwingend notwendig zu sein.

In einer bevorzugten Ausführungsform kann eine wässrige Lösung weiterhin ein Anion mindestens einer dritten Säure enthalten, wobei die dritte Säure bevorzugt ausgewählt ist aus einer Gruppe, die Aminosäuren, Carbonsäuren, Citronensäure, Weinsäure, Äpfelsäure, Oxalsäure, Glykolsäure, Bernsteinsäure, Gluconsäure, Glycin, Essigsäure, Schwefelsäure und/oder Kombinationen umfasst. Nicht durch Laktat, Säureanion (der dritten Säure) und Phosphat ausgeglichene Ladungen können z.B. durch OH⁻-Ionen ausgeglichen werden.

In einer bevorzugten Ausführungsform kann neben Aluminium auch eine weitere Kationenart oder mehrere weitere Kationenarten in der Lösung enthalten sein. Die Menge und die Anzahl verschiedener dieser Kationen übersteigt dabei die als Verunreinigung - insbesondere beim Einsatz von Substanzen in technischer Qualität - ohnehin vorhandenen Kationen. Daher soll im Folgenden als weiteres Kation jeglicher gezielter bzw. gewünschter Zusatz von Kationen verstanden werden. Als besonders bevorzugte Kationen haben sich Alkali- und Erdalkali- Ionen erwiesen. Diese bieten sich insbesondere deshalb an, da sie meist leicht lösliche Salze bilden und daher einerseits leicht löslich sind, andererseits auch selten zum Ausfallen aus einer Al-haltigen Lösung neigen. Alternativ oder zusätzlich zu diesen Kationen sind auch Kationen der Übergangs- oder Seltenerdmetallen als kationische Zusätze möglich. In einer besonders bevorzugten Ausführungsform handelt es sich bei dem zugesetzten Kation um ein Ammonium-Ion. Alternativ oder ergänzend dazu haben sich Na⁺, K⁺, Ca²⁺, Mg²⁺ oder Zr⁴⁺ als kationische Zusätze in AI-Laktat-Phosphat-Lösungen erwiesen. In einer bevorzugten Ausführungsform zeichnet sich die wässrige Lösung dadurch aus, dass sie einen Zusatz eines Kations umfasst, wobei das Kation bevorzugt ausgewählt ist aus einer Gruppe, die Alkaliionen, Erdalkaliionen, Ammonium-Ionen, Kationen eines oder mehrerer Übergangs- oder Seltenerdmetalle oder Kombinationen davon umfasst. In einer besonders bevorzugten Ausführungsform ist ein zugesetztes Kation ausgewählt aus der Gruppe, die Na⁺, K⁺, Ca²⁺, Mg²⁺, Zr⁴⁺ , NH₄⁺ oder Kombinationen davon umfasst.

In einer weiteren bevorzugten Ausführungsform weist die Lösung Cluster der theoretischen Zusammensetzung Al³⁺_{A}(C₃H₅O₃⁻)_{x•A}S^{M-}_{y•A}(H₂PO₄⁻)_{z•A}(OH-)(_{3A-x•A-M•y•A-z•A}) auf, wobei S das Anion einer optional vorhandenen dritten Säure mit der Ladung M ist, x ein Wert im Bereich von 0,01 - 2,99, bevorzugt 0,5 - 2,8, weiter bevorzugt 0,75 - 2,0, meist bevorzugt 1,0 - 1,5 ist, y ein Wert im Bereich von 0 2,8, bevorzugt 0 2, bevorzugt 0 - 1,25, besonders bevorzugt 0 - 1,0 ist und z ein Wert im Bereich von 0,05 - 2,9, bevorzugt, 0,1 - 2,5, weiter bevorzugt 0,2 - 1,5, besonders bevorzugt 0,3 - 1,25 ist. Die Summe aus x, M•y und z ist bevorzugt ≤ 3, so dass gemäß der obigen Formel die positive Ladung der Aluminiumionen ausgeglichen wird. Jedoch sind auch andere (unten näher beschriebene andere) Kationen in der Lösung denkbar, so dass die Summe aus x, M•y und z ist auch größer als 3 sein kann. Da Laktat und Phosphat zwingend vorhanden sind, um eine stabile aluminium- und phosphathaltige Lösung erhalten zu können, sind x und z immer > 0.

Laktationen sind dabei bevorzugt aber nicht zwingend erforderlich die - bezogen auf den molaren Anteil der gelösten Stoffe - am häufigsten vorkommende anionische Komponente in der Lösung. Wie aus obiger Formel ersichtlich ist, kann x in den Clustern einen Wert im Bereich von 0,5 - 2.8 annehmen, so dass bei einem Faktor von 2,8 bereits ein Großteil der durch die Aluminiumionen in die Lösung eingebrachten Ladung durch Laktationen kompensiert ist. Der Anteil an Phosphationen ist somit dann entsprechend klein. Weitere durch Aluminiumkationen eingebrachte Ladungen können durch die zusätzliche Säure S oder die optional vorhandenen OH⁻-Ionen kompensiert werden.

In einer bevorzugten Ausführungsform der vorliegenden Erfindung ist Y > 0. Somit ist gemäß der oben genannten Formel mindestens ein Anion einer dritten Säure enthalten. Bevorzugt ist diese Säure bzw. dessen Anion ausgewählt aus einer Gruppe, die Aminosäuren, Carbonsäuren, Citrat, Tartrat, Malat, Oxalat, Glykolat, Succinat, Gluconat, Glycinat, Acetat, Sulfat und/oder Kombinationen davon umfasst. Untersuchungen haben gezeigt, dass durch diese Anionen die Stabilität der wässrigen Lösung weiter gesteigert werden kann. Außerdem ist in einigen Fällen eine Steigerung der Konzentration an Aluminiumionen und/oder Phosphationen möglich.

In einer bevorzugten Ausführungsform zeichnet sich die wässrige Lösung dadurch aus, dass sie in einem Temperaturbereich von 0 - 80°C stabil ist. Besonders bevorzugt sind wässrige Lösungen, die auch bei niedrigen Temperaturen lagerstabil sind. Bevorzugt sind Lösungen, die bei <30°C, bevorzugt <20°C, besonders bevorzugt <10°C lagerstabil sind. Als lagerstabil im Rahmen dieser Erfindung sollen Zeiträume verstanden werden, die bevorzugt 1 Monat, bevorzugt 6 Monate, besonders bevorzugt 12 Monate übersteigen. Bevorzugt ist somit eine wässrige Lösung länger als 1 Monat, bevorzugt länger als 6 Monate, besonders bevorzugt länger als 12 Monate lagerstabil. Diese Lagerstabilität erlaubt es, diese Lösungen bis zu deren Einsatz vorzuhalten und/oder zu transportieren. Auch der Transport über lange Strecken, z. B. per LKW oder auch per Schiff ist bei solcher Lagerstabilität möglich.

Um den Phosphatgehalt der Lösung möglichst hoch zu halten, ist bevorzugt, dass ein möglichst hoher Anteil der Anionen Phosphationen sind. Gemäß der obigen Formel ist x somit bevorzugt vergleichsweise klein. In einer bevorzugten Ausführungsform der vorliegenden Erfindung ist x in einem Bereich von 0,5 - 2,5, bevorzugt im Bereich von 0,75 - 2,0, besonders bevorzugt im Bereich zwischen 1,0 und 1,5. Im Bereich von x = 1,0 bis x = 1,5 wird somit ein Drittel bis die Hälfte der durch die dreifach positiv geladenen Aluminiumkationen in die Lösung eingebrachten positiven Ladungen durch Laktat kompensiert. Die übrige zur Kompensation der positiven Ladung notwendige negative Ladung kann durch Anionen S der Säure, Phosphationen oder OH⁻-Ionen bereitgestellt werden. Die Stabilität der Lösung nimmt bei einem Wert von x < 0,5 ab. Es scheint, dass bei geringen Laktatanteilen die Stabilisierung der Lösung nicht ausreichend ist und es daher in Abhängigkeit von den Lagerbedingungen zum Ausfallen von Aluminiumphosphat kommen kann.

Auch für die Menge an Anionen der zusätzlichen dritten Säure (S) gilt, dass diese möglichst klein sein sollte, um den Phosphatgehalt möglichst groß halten zu können. In einer bevorzugten Ausführungsform ist Y daher kleiner als 1,25, bevorzugt kleiner als 1,0, besonders bevorzugt kleiner als 0,8.

In einer bevorzugten Ausführungsform weist die dritte Säure eine zusätzliche Funktionalität auf. Eine solche zusätzliche Funktionalität ist besonders bevorzugt ausgewählt aus einer Gruppe, die Substituenten umfasst, die eine Aminofunktion, eine weitere Säurefunktion, eine Carbonylfunktion, eine Doppelbindung, eine Dreifachbindung, ein Heteroatom, eine Ladung, eine Partialladung und/oder Kombinationen davon in das Molekül einbringen. Insbesondere dann, wenn die Funktionalität der dritten Säure dazu geeignet ist, die Eigenschaften der gewünschten Lösung positiv zu verändern, kann der Anteil der dritten Säure sehr hoch sein und beispielsweise den Anteil an Phosphorsäure und/oder Milchsäure sogar übersteigen. Insbesonderewenn die Einstellung eines bestimmten pH-Wertes gewünscht ist, kann dies in einigen bevorzugten Ausführungsformen durch die Auswahl einer geeigneten dritten Säure, welche entsprechende Funktionalitäten mitbringt, realisiert sein. So könnte beispielsweise auch eine Puffer-Funktion z.B. durch eine Aminofunktion und/oder eine (weitere) Säurefunktion realisiert werden. Somit wäre es möglich, den pH-Wert auch bei Veränderung der Umgebungsbedingungen (z.B. Temperaturschwankungen, Verunreinigungen, Verdünnungen (z.B. durch Regenwasser)) zumindest weitgehend konstant zu halten und das Ausfallen von Salzen und/oder anderen Feststoffen zu vermeiden.

Es hat sich gezeigt, dass es insbesondere für die Langzeitlagerstabilität vorteilhaft ist, wenn X>Z ist. In einer bevorzugten Ausführungsform ist somit der Anteil an Laktationen in der Lösung größer als der der Phosphationen. Dies ist jedoch wie unten gezeigt nicht zwingend erforderlich.

Um die Langzeitstabilität der Lösung zu gewährleisten ist bevorzugt, dass die Konzentration der Aluminiumionen im Bereich von 1,5 - 10 Gewichts-% (ggf. umgerechnet auf Al³⁺) bezogen auf die Gesamtmasse der Lösung liegt. Weiter bevorzugt liegt die Konzentration der Aluminiumionen (ggf. umgerechnet auf Al³⁺) im Bereich von 1,5 - 5 Gewichts-%.

In einer weiteren bevorzugten Ausführungsform zeichnet sich die wässrige Lösung dadurch aus, dass in der theoretischen Zusammensetzung Al³⁺_{A}(C₃H₅O₃⁻)_{x•A}S^{M-}_{y•A}(H₂PO₄⁻)_{z•A}(OH)⁻_{(3A-x•A-M•y•A-z•A)} der gelösten Stoffe der Index (3A-x·A-M·y·A-z·A) > 0 ist. Somit liegen bevorzugt OH⁻-Ionen vor. Besonders bevorzugt ist, dass der Index (3A-x·A-M·y·A-z·A) im Bereich von 0,5 bis etwa 1,75 liegt (siehe Beispiele unten). Die Summe aus x, M•y und z liegt somit bevorzugt im Bereich 1,25 bis 2,5.

Der Lösung können weitere Stabilisatoren (wie z. B. Chelatbilder, Polymere) zugesetzt werden. Denkbar wäre insbesondere der Zusatz von einer Substanz oder mehrerer Substanzen, die unabhängig voneinander ausgewählt ist/sind aus einer Gruppe, die Acetylaceton (acac), Ethylendiamin (en), 2-(2-Aminoethylamino)ethanol (AEEA), Diethylentriamin (dien), Iminodiacetat (ida), Triethylentetramin (trien, TETA), Triaminotriethylamin (tren), Nitrilotriacetat (nta), Bis(salicyliden)ethylendiamin (salen), Ethylendiaminotriacetat (ted), Ethylendiamintetraacetat (EDTA), Diethylentriaminpentaacetat (DTPA), 1,4,7,10-Tetraazacyclododecan-1,4,7,10-tetra-acetat (DOTA), Dimethylglyoxim (dmg), 8-Hydroxychinolin (oxin), 2,2'-Bipyridin (bpy), 1,10-Phenanthrolin (phen), Dimercaptobernsteinsäure (DMSA), 1,2-Bis(diphenylphosphino)ethan (dppe) oder andere umfasst. Insbesondere sind Chelatbilder bevorzugt, bei denen mindestens eine energetisch positive Wechselwirkung zwischen dem Chelatbilder und dem zu komplexierenden Kation über ein Heteroatom ausgebildet wird, welches ausgewählt ist aus einer Gruppe, die N, P und S umfasst, oder eine funktionelle Gruppe, die ein Sauerstoffatom umfasst und ausgewählt ist aus einer Gruppe, die Ketone, (A(C=O)B mit A, B = organischer Rest), Aldehyde (A = H, B = organischer Rest oder H), Ester (A = O-R, B = organischer Rest oder H), Amide (A = NH₂, NHR, NR₁R₂, B = organischer Rest oder H), Harnstoffe (A, B = NH₂, NHR, NR₁R₂), Urethane (A = OR, B = NH₂, NHR, NR₁R₂), Alkohole (A-OH, A = organischer Rest) umfasst. Es ist jedoch bevorzugt, dass die Lösung keine weiteren Stabilisatoren enthält. Insbesondere ist bevorzugt, dass die Lösung keine der zuvor genannten Stabilisatoren und insbesondere keine der oben genannten Chelatbildner umfasst.

Ein weiterer wesentlicher Gegenstand der Erfindung ist ein Verfahren zur Herstellung einer wässrigen Lösung gemäß Anspruch 7, wobei die Lösung Aluminiumionen in einem Anteil im Bereich von 1,5 - 15 Gewichts-% (ggf. umgerechnet auf Al³⁺) bezogen auf die Gesamtmasse der Lösung umfasst und weiterhin Anionen der Milchsäure (Laktat-Ionen) und der Phosphorsäure (Phosphat-Ionen) umfasst, wobei der molare Anteil der Laktat-Ionen im Bereich des 0,01 - 2,99-fachen bezogen auf den molaren Anteil an Al³⁺ ist und der molare Anteil der Phosphat-Ionen im Bereich des 0,01 - 2,99-fachen bezogen auf den molaren Anteil an Al³⁺ ist, wobei sich das Verfahren durch die Schritte
a) Bereitstellen von Wasser in einem Reaktionsgefäß,
b) Zugabe eines basischen Aluminiumsalzes, welches bevorzugt ausgewählt ist aus einer Gruppe, die Al-Carbonat, AI-Hydroxid, Al-Oxid, ein Aluminat oder Kombinationen davon enthält, unter Rühren in das Reaktionsgefäß,
c) Zugabe von Milchsäure und/oder eines Laktats und parallel dazu oder zeitlich versetzt davon von Phosphorsäure und/oder eines Phosphats,
d) Rühren der erhaltenen Mischung,
auszeichnet, wobei die Reihenfolge der Ausführung der Schritte b) und c) beliebig ist.

Es konnte gezeigt werden, dass bei der oben genannten Abfolge der einzelnen Prozessschritte eine stabile Lösung erhalten werden konnte. Dieses Verfahren ermöglicht die Herstellung großer Mengen einer gewünschten, bevorzugt wie oben beschriebenen Lösung. Beispielsweise können so in einem Ansatz mehr als 1 m³ der oben beschriebenen Lösung hergestellt werden.

Ist das Vorhandensein einer weiteren anionischen Komponente vorgesehen, so wird diese bevorzugt in Form einer Säure oder eines leicht löslichen Salzes zugegeben. Weiter bevorzugt erfolgt die Zugabe zusammen mit den übrigen in Schritt c) genannten Substanzen oder während oder nach Schritt d).

In einer bevorzugten Variante des Verfahrens ist vorgesehen, dass Cluster der theoretischen Zusammensetzung Al³⁺_{A}(C₃H₅O₃⁻)_{x•A}S^{M-}_{y•A}(H₂PO₄⁻)_{z•A}(OH)⁻_{(3A-x•A-M•y•A-z•A)} erzeugt werden, wobei S das Anion einer optional vorhandenen dritten Säure mit der Ladung M ist, x ein Wert im Bereich von 0,01 - 2,99, bevorzugt 0,5 - 2,8, weiter bevorzugt 0,75 - 2,0, meist bevorzugt 1,0 - 1,5 ist, y ein Wert im Bereich von 0 2,8, bevorzugt 0 2, bevorzugt 0 - 1,25, besonders bevorzugt 0 - 1,0 ist und z ein Wert im Bereich von 0,05 - 2,9, bevorzugt, 0,1 - 2,5, weiter bevorzugt 0,2 - 1,5, besonders bevorzugt 0,3 - 1,25 ist.

Insbesondere ist verfahrensseitig bevorzugt, dass Schritt c) bei einer Temperatur >25°C, bevorzugt >40°C, weiter bevorzugt >50°C, besonders bevorzugt bei 60 - 70°C oder alternativ dazu unter Rückfluss erfolgt. Bei diesen Temperaturen wird der Mischung bzw. Lösung genügend Energie zugeführt, um ein Ausfällen von Aluminiumphosphat weitgehend zu verhindern. Es wird vermutet, dass bei diesen Temperaturen genügend thermische Energie zur Verfügung steht, so dass die Ionen Cluster ausbilden können. Diese Cluster sind löslich und/oder bleiben kolloidal in Lösung und fallen auch bei anschließendem Unterschreiten der oben genannten Temperatur nicht aus.

Bei einigen Zusammensetzungen und/oder Varianten des Verfahrens ist es nicht vollständig ausgeschlossen, dass ein geringer Anteil des eingesetzten Aluminiums und/oder Phosphats z. B. als Aluminiumphosphat oder auch zusammen mit anderen Substanzen ausfällt. Auch Verunreinigungen der Ausgangsmaterialien können als unlösliche Bestandteile in der Lösung bzw. Mischung enthalten sein. In diesem Fall ist eine Filtration vorteilhaft. In einer bevorzugten Verfahrensvariante zeichnet sich das Verfahren daher dadurch aus, dass auf Schritt c) eine Filtration folgt. Bevorzugt wird diese durch eine Filtration in einer Filterpresse durchgeführt. Als Produkt dieses Filtrationsschrittes erhält man eine klare Lösung, die den Anforderungen in Bezug auf die gewünschte Stabilität und den Gehalt an Aluminium- und Phosphationen genügt.

Beispiele für eine wie oben beschriebene Lösung und ein Verfahren zu deren Herstellung sind exemplarisch im Folgenden gegeben:

### Beispiel 1:

Theoretische Zusammensetzung der gelösten Stoffe: Al³⁺(C₃H₅O₃)⁻_{1,5}(H₂PO₄)⁻ (OH)⁻_{0,5}

Zur Herstellung einer solchen Lösung wird Aluminium in Form eines basischen Salzes (Carbonat, Hydroxid, Oxid, Aluminat, bevorzugt Hydroxid) in wässriger Suspension mit 10 - 20 Gewichts-% (Gew.-%) Feststoff vorgelegt. Ein geeigneter Einsatzstoff sind etwa die amorphen sogenannten "Aluminiumoxidhydrate", die in bekannter Weise beim Fällen aus Aluminiumsalzlösungen durch Basenzugabe entstehen. Die Verwendung kristalliner Aluminiumhydroxide wie etwa Bayerit (alpha-Al(OH)₃), Hydrargillit (gamma-Al(OH)₃), Böhmit (alpha-AIO(OH)) oder Diaspor (gamma-AIO(OH)) ist zwar nicht ausgeschlossen, ist aber weniger bevorzugt, weil diese Aluminiumsalze sich typischerweise langsamer in Säuren lösen als amorphes Aluminiumhydroxid oder -oxidhydrat. Am reaktivsten ist naturgemäß frisch gefälltes Aluminiumhydroxid oder -oxidhydrat, aber auch die handelsüblichen Aluminiumhydro-xide oder -oxidhydrate sind gut geeignet. Ein Beispiel für einen geeigneten Rohstoff ist Aluminiumoxid, hydratisiert (Pulver, gemäß Ph. Eur. 9. Ed., 47,0-60,0 % Al2O3, Dr. Paul Lohmann GmbH KG, Artikelnummer 511066100). Anschließend werden unter Rühren Milchsäure und Phosphorsäure hinzugegeben und bei einer Temperatur von etwas über 40°C zur Reaktion gebracht. Dabei entsteht eine klare bis leicht trübe Lösung, die mittels Filtration von eventuell enthaltenen (ungelösten oder ausgefallenen) Feststoffanteilen befreit wird. Die Filtration findet dabei bei maximal 80°C statt. Es hat sich während weiterer Versuche herausgestellt, dass eine Filtration bei geringeren Temperaturen vorteilhaft sein kann. Die so erhaltene Lösung ist lagerstabil bei Raumtemperatur. Auch oberhalb der Raumtemperatur ist die Lösung lagerstabil. Erst bei über 60°C bildet sich reversibel ein viskoses Gel. Eine solche Lösung eignet sich beispielsweise zum Einsatz in Kunststoffen, Klebstoffen, Lacken, Abwasserbehandlungen oder Flockungsmitteln.

### Beispiel 2:

Theoretische Zusammensetzung der gelösten Stoffe: Al³⁺(C₃H₅O₃)⁻_{1,2}(H₂PO₄)⁻_{0,8}(OH)⁻

Zur Herstellung einer Lösung mit der oben genannten Zusammensetzung der gelösten Stoffe wurden 1220 kg Reinstwasser, 196 kg Milchsäure, 147 kg Phosphorsäure und 1,59 kmol Al³⁺ in Form eines basischen Salzes eingesetzt. Dazu wurde zunächst das Wasser im Ansatzbehälter vorgelegt. Zu der Vorlage werden unter Rühren Milchsäure und Phosphorsäure langsam hinzugegeben. Anders als im oben genannten Beispiel 1 wird erst im Anschluss daran die Aluminiumverbindung zu der vorgelegten Lösung zugegeben. Anschließend wird diese auf 60-65°C erwärmt. Um die Langzeitstabilität der Lösung gewährleisten zu können, wird die erhaltene Mischung für 20±2 Stunden bei 60-65°C unter Rückflusskühlung gehalten. Nach Beendigung der dabei erfolgenden Reaktion wird die Mischung/Lösung über eine Filterpresse klar filtriert und abgefüllt.

Beispiele für Zusammensetzungen, für die stabile Lösungen erreicht werden konnten, zeigt folgende Auflistung. Dabei sind sowohl Zusammensetzungen enthalten, die keine zusätzlichen Säurereste enthalten, als auch welche die derartige zusätzliche Anionen umfassen. Diese Auflistung ist lediglich exemplarisch und es existieren weitere Beispiele für erfindungsgemäße stabile wässrige Lösungen.

Zusammensetzungen ohne zusätzliche Anionen (S):

| |
|---|
| Al₄(C₃H₅O₃)₆(H₂PO₄)₃(OH)₃ |
| Al₅(C₃H₅O₃)₆(H₂PO₄)₃(OH)₆ |
| Al₆(C₃H₅O₃)₆(H₂PO₄)₄(OH)₈ |

Zusammensetzungen mit zusätzlichen Anionen (S):
S = Sulfat:

| |
|---|
| Al₄(C₃H₅O₃)₃(SO₄)₃(H₂PO₄)(OH)₂ |
| Al₆(C₃H₅O₃)₃(SO₄)₆(H₂PO₄)(OH)₂ |

S = Oxalat

| |
|---|
| Al_{5.4}(C₃H₅O₃)₆(C₂O₄)_{0.52}(H₂PO₄)₃(OH)_{7.16} |
| Al_{5.4}(C₃H₅O₃)₅(C₂O₄)_{0.52}(H₂PO₄)₃(OH)_{7.16} |

S = Citrat

| |
|---|
| Al_{5.7}(C₃H₅O₃)₅(C₃H₅O₇)_{0.33}(H₂PO₄)₃(OH)_{8.11} |
| Al_{5.7}(C₃H₆O₃)₆(C₆H₅O₇)_{0.66}(H₂PO₄)₃(OH)_{7.12} |

S = Succinat

| |
|---|
| Al_{4.4}(C₃H₅O₃)₅(C₄H₄O₄)_{0.52}(H₂PO₄)₃(OH)_{4.16} |
| Al_{4.4}(C₃H₅O₃)₅(C₄H₄O₄)(H₂PO₄)₃(OH)_{3.2} |

S = Malat

| |
|---|
| Al_{5.7}(C₃H₅O₃)₅(C₄H₄O₅)_{0.52}(H₂PO₄)₃(OH)_{8.06} |
| Al₆(C₃H₅O₃)₃(C₄H₄O₅)₃(H₂PO₄)₃(OH)₆, |

S = Acetat

| |
|---|
| Al₇(C₃H₅O₃)₆(C₂H₃O₂)(H₂PO₄)₃(OH)₁₂ |
| Al_{5.7}(C₃H₅O₃)₆(C₂H₃O₂)(H₂PO₄)₃(OH)_{8.1} |

S = Glycinat

| |
|---|
| Al₆(C₃H₅O₃)₆(C₂H₄NO₂)(H₂PO₄)₃(OH)₈ |
| Al₇(C₃H₆O₃)₆(C₂H₄NO₂)₂(H₂PO₄)₃(OH)₁₀ |

Die Konzentration der Aluminiumionen liegt dabei für alle oben genannten Lösungen im Bereich von 0,5 - 15 Gewichts-% (ggf. umgerechnet auf Al³⁺) bezogen auf die Gesamtmasse der Lösung.

Bevorzugt liegt der pH-Wert der jeweiligen Lösung im sauren Bereich, weiter bevorzugt zwischen 1 und 6. In einer weiteren bevorzugten Ausführungsform weist die Lösung einen pH-Wert zwischen 2 und 4 auf.

In einer weiteren bevorzugten Ausführungsform der Erfindung liegt die Gesamtkonzentration der (im Wasser) gelösten Feststoffe im einem Bereich > 10 Gewichts-% bezogen auf die Gesamtmasse der Lösung. Besonders bevorzugt sind Lösungen, die eine Gesamtkonzentration der (im Wasser) gelösten Feststoffe im einem Bereich von > 15 Gewichts-% bezogen auf die Gesamtmasse der Lösung aufweisen.

Es hat sich jedoch gezeigt, dass hohe Konzentrationen zu einer verringerten Langzeitstabilität der Lösung führen können. Es ist daher bevorzugt, dass die Gesamtkonzentration der (im Wasser) gelösten Feststoffe im einem Bereich < 50 Gewichts-% bezogen auf die Gesamtmasse der Lösung aufweist. Besonders bevorzugt sind Lösungen, die eine Gesamtkonzentration der (im Wasser) gelösten Feststoffe im einem Bereich von < 35 Gewichts-% bezogen auf die Gesamtmasse der Lösung aufweisen. Insbesondere bevorzugt sind Lösungen, die eine Gesamtkonzentration der (im Wasser) gelösten Feststoffe im einem Bereich von 15 - 30 Gewichts-% bezogen auf die Gesamtmasse der Lösung aufweisen.

In einigen bevorzugten Ausführungsformen ist der molare Anteil an Phosphat höher als der des Lactats. Als Beispiele für derartige stabile Lösungen konnten die folgenden Zusammensetzungen identifiziert werden:

| |
|---|
| Al_{6.7}(C₃H₅O₃)₂(C₄H₄O₅)₄(H₂PO₄)₃(OH)_{7.1} |
| Al_{5.8}(C₃H₅O₃)(C₄H₄O₅)₅(H₂PO₄)₃(OH)_{3.4} |

In diesem Fall ist als weiteres Anion Malat eingesetzt worden. Es gibt auch weitere bevorzugte Beispiele für stabile Lösungen, in denen zwar das stöchiometrische Verhältnis zwischen Lactat und Phosphat gleich ist, jedoch aufgrund der höheren molaren Masse des Phosphats das Massenverhältnis zwischen Lactat und Phosphat zu Gunsten des Phosphats verschoben ist. Beispiele für stabile Lösungen, in denen das molare Verhältnis zwischen Lactat und Phosphat gleich ist, sind in folgenden Beispielen gezeigt. Auch hier wurde als drittes Anion Malat eingesetzt, wobei dies jedoch nicht zwingend ist und auch andere Substanzen als dritte Säure eingesetzt werden können:

| |
|---|
| Al₆(C₃H₅O₃)₃(C₄H₄O₅)₃(H₂PO₄)₃(OH)₆, |
| Al₆(C₃H₅O₃)₃(C₄H₄O₅)₃(H₂PO₄)₃(OH)₆, |

Dass eine große Auswahl weiterer Säuren für die Auswahl der dritten Säure zur Verfügung stehen, soll durch die im Folgenden dargestellten Beispiele belegt werden, bei denen Aminosäuren als dritte Säure verwendet wurden. Neben den gezeigten Aminosäuren Glutaminsäure und Asparaginsäure wären auch andere (bevorzugt "einfache") Carbonsäuren oder anorganische Säuren, wie z.B. die Aminosäuren Glycin, Tyrosin, Glutamat, Pyroglutamat, Aspartat etc. als dritte Säure möglich.

| |
|---|
| Mit Glutaminsäure: |
| Al₄(C₃H₆O₃)₆(C₆H₈NO₄)_{1.5}(H₂PO₄)₃(OH)_{1.5} |
| Al₄(C₃H₅O₃)₄(C₅H₈NO₄)(H₂PO₄)₄(OH)₃ |
| Mit Asparaginsäure: |
| Al₄(C₃H₅O₃)₆(C₄H₆NO₄)_{1.6}(H₂PO₄)₃(OH)_{1.5} |
| Al₄(C₃H₆O₃)₆(C₄H₆NO₄)(H₂PO₄)₃(OH)₂ |

Beispiele für die oben genannten stabilen Lösungen, bei denen als dritte Säure (bzw. als daraus resultierendes Anion) eine anorganische Säure ist, sind oben ("S = Sulfat") beispielhaft dargestellt.

Außerdem ist es denkbar, dass die eingesetzte (molare) Menge des dritten Anions (bzw. der dritten Säure) gleich oder sogar größer ist als die von Lactat und Phosphat. Als Beispiele zeigt die folgende Tabelle Zusammensetzungen für stabile Lösungen. Insbesondere das letzte Beispiel zeigt, dass eine stabile Lösung auch dann erhalten werden kann, wenn die (molare) Sulfat-Menge die (molare) Gesamtmenge von Lactat und Phosphat übersteigt:

| |
|---|
| Al₄(C₃H₅O₃)₃(SO₄)₃(H₂PO₄)(OH)₂ |
| Al₅(C₃H₅O₃)₃(SO₄)₃(H₂PO₄)₂(OH)₄ |
| Al₅(C₃H₅O₃)₆(SO₄)₃(H₂PO₄)(OH)₂ |
| Al₆(C₃H₅O₃)₃(SO₄)₆(H₂PO₄)(OH)₂ |

Alle in den Tabellen gelisteten Beispiele ergaben klare Lösungen.

## Patentansprüche

1. Wässrige Lösung enthaltend Aluminiumionen, **dadurch gekennzeichnet, dass** die Lösung Aluminiumionen in einem Anteil im Bereich von 1,5 - 15 Gewichts-% (ggf. umgerechnet auf Al³⁺) bezogen auf die Gesamtmasse der Lösung umfasst und weiterhin Anionen der Milchsäure (Laktat-Ionen) und der Phosphorsäure (Phosphat-Ionen) umfasst, wobei der molare Anteil der Laktat-Ionen im Bereich des 0,01 - 2,99-fachen bezogen auf den molaren Anteil an Al³⁺ ist und der molare Anteil der Phosphat-Ionen im Bereich des 0,01 - 2,99-fachen bezogen auf den molaren Anteil an Al³⁺ ist.

2. Wässrige Lösung nach Anspruch 1, **dadurch gekennzeichnet, dass** die Lösung weiterhin ein Anion mindestens einer dritten Säure enthält, wobei die dritte Säure bevorzugt ausgewählt ist aus einer Gruppe, die Aminosäuren, Carbonsäuren, Citronensäure, Weinsäure, Äpfelsäure, Oxalsäure, Glykolsäure, Bernsteinsäure, Gluconsäure, Glycin, Essigsäure, Schwefelsäure und/oder Kombinationen umfasst.

3. Wässrige Lösung nach einem der vorangehenden Ansprüchen, **dadurch gekennzeichnet, dass** die Lösung einen Zusatz mindestens eines weiteren Kations enthält, wobei das Kation ausgewählt ist aus einer Gruppe, die Alkaliionen, Erdalkaliionen, Ammonium-Ionen, Kationen eines oder mehrerer Übergangs- oder Seltenerdmetalle oder Kombinationen davon umfasst und besonders bevorzugt ausgewählt ist aus einer Gruppe, die Na⁺, K⁺, Ca²⁺, Mg²⁺, Zr²⁺ , NH₄⁺ oder Kombinationen davon umfasst.

4. Wässrige Lösung nach einem der vorangehenden Ansprüchen, **dadurch gekennzeichnet, dass** die Lösung Cluster aufweist, die die theoretische Zusammensetzung Al³⁺_{A}(C₃H₅O₃⁻)_{x•A}S^{M-}_{y•A}(H₂PO₄⁻)_{z•A}(OH)⁻_{(3A-x•A-M•y•A-z•A)} aufweisen, wobei S das Anion einer optional vorhandenen dritten Säure mit der Ladung M ist, x ein Wert im Bereich von 0,01 - 2,99, bevorzugt 0,5 - 2,8, weiter bevorzugt 0,75 - 2,0, meist bevorzugt 1,0 - 1,5 ist, y ein Wert im Bereich von 0 - 2,8, bevorzugt 0 - 2, bevorzugt 0 - 1,25, besonders bevorzugt 0 - 1,0 ist und z ein Wert im Bereich von 0,05 - 2,9, bevorzugt, 0,1 - 2,5, weiter bevorzugt 0,2 - 1,5, besonders bevorzugt 0,3 - 1,25 ist.

5. Wässrige Lösung nach einem der vorangehenden Ansprüchen, **dadurch gekennzeichnet, dass** die Lösung in einem Temperaturbereich von 0°C - 80°C stabil ist und insbesondere bei einer Temperatur < 30°C, bevorzugt < 20°C, besonders bevorzugt < 10°C über einen Zeitraum von > einem Monat, bevorzugt > 6 Monaten, besonders bevorzugt > 12 Monaten lagerstabil ist.

6. Wässrige Lösung nach einem der vorangehenden Ansprüchen, **dadurch gekennzeichnet, dass** (3A-x·A-M·y·A-z·A) > 0 ist.

7. Verfahren zur Herstellung einer wässrigen Lösung nach einem der Ansprüche 1 bis 6, wobei die Lösung Aluminiumionen in einem Anteil im Bereich von 1,5 - 15 Gewichts-% (ggf. umgerechnet auf Al³⁺) bezogen auf die Gesamtmasse der Lösung umfasst und weiterhin Anionen der Milchsäure (Laktat-Ionen) und der Phosphorsäure (Phosphat-Ionen) umfasst, wobei der molare Anteil der Laktat-Ionen im Bereich des 0,01 - 2,99-fachen bezogen auf den molaren Anteil an Al³⁺ ist und der molare Anteil der Phosphat-Ionen im Bereich des 0,01 - 2,99-fachen bezogen auf den molaren Anteil an Al³⁺ ist, gegenzeichnet durch die Schritte:
a) Bereitstellen von Wasser in einem Reaktionsgefäß,
b) Zugabe eines basischen Aluminiumsalzes, welches bevorzugt ausgewählt ist aus einer Gruppe, die Al-Carbonat, AI-Hydroxid, Al-Oxid, ein Aluminat oder Kombinationen davon enthält, unter Rühren in das Reaktionsgefäß,
c) Zugabe von Milchsäure und/oder eines Laktats und parallel dazu oder zeitlich versetzt davon von Phosphorsäure und/oder eines Phosphats,
d) Rühren der erhaltenen Mischung,
wobei die Reihenfolge der Ausführung der Schritte b) und c) beliebig ist.

8. Verfahren nach Anspruch 7 **dadurch gekennzeichnet, dass** Cluster der theoretischen Zusammensetzung Al³⁺_{A}(C₃H₅O₃⁻)_{x•A}S^{M-}_{y•A}(H₂PO₄⁻)_{z•A}(OH)⁻_{(3A-x•A-M•y•A-z•A}) erzeugt werden, wobei S das Anion einer optional vorhandenen dritten Säure mit der Ladung M ist, x ein Wert im Bereich von 0,01 - 2,99, bevorzugt 0,5 - 2,8, weiter bevorzugt 0,75 - 2,0, meist bevorzugt 1,0 - 1,5 ist, y ein Wert im Bereich von 0 - 2,8, bevorzugt 0-2, bevorzugt 0 - 1,25, besonders bevorzugt 0 - 1,0 ist und z ein Wert im Bereich von 0,05 - 2,9, bevorzugt, 0,1 - 2,5, weiter bevorzugt 0,2 - 1,5, besonders bevorzugt 0,3 - 1,25 ist.

9. Verfahren nach Anspruch 7 oder 8 **dadurch gekennzeichnet, dass** Schritt c) bei einer Temperatur > 25°C, bevorzugt > 40°C, weiter bevorzugt > 50°C, besonders bevorzugt bei 60 - 70°C oder alternativ dazu unter Rückfluss erfolgt.

10. Verfahren nach einem der Ansprüche 7 - 9 **dadurch gekennzeichnet, dass** auf Schritt c) eine Filtration folgt.

## Claims

1. Aqueous solution containing aluminum ions, **characterized in that** the solution comprises aluminum ions in a proportion of 1.5 % - 15 % by weight (converted, if necessary, to Al³⁺) based on the total mass of the solution, as well as anions of lactic acid (lactate ions) and of phosphoric acid (phosphate ions), wherein the molar proportion of the lactate ions is in the range of 0.01 - 2.99 times the molar proportion of Al³⁺, and the molar proportion of phosphate ions is in the range of 0.01 - 2.99 times the molar proportion of Al³⁺.

2. Aqueous solution according to claim 1, **characterized in that** the solution further contains an anion of at least a third acid, wherein the third acid is preferably selected from a group comprising amino acid, carboxylic acid, citric acid, tartaric acid, malic acid, oxalic acids, glycolic acids, succinic acid, gluconic acid, glycine, acetic acid, sulfuric acid, and/or combinations.

3. Aqueous solution according to any of the preceding claims, **characterized in that** the solution has an addition of at least one additional cation, wherein the cation is selected from a group comprising alkali metal ions, alkali earth ions, ammonium ions, cations of one or a plurality of transition or rare earth metals or combinations thereof and is particularly preferably selected from a group comprising Na⁺, K⁺, Ca²⁺, Mg²⁺, Zr²⁺, NH₄⁺, or combinations thereof.

4. Aqueous solution according to any of the preceding claims, **characterized in that** the solution has clusters which include the theoretical compound Al³⁺_{A}(C₃H₅O₃⁻)_{x•A}S^{M-}_{y•A}(H₂PO₄⁻)_{z•A}(OH)⁻_{(3A-x•A-M•y•A-z•A}), wherein S is the anion of the optionally present third acid with the charge M, x is a value in the range of 0.01 - 2.99, preferably 0.5 - 2.8, more preferably 0.75 - 2.0, most preferably 1.0 - 1.5, y is a value in the range of 0 - 2.8, preferably 0 - 2, preferably 0 - 1.25, particularly preferably 0 - 1.0, and z is a value in the range of 0.05 - 2.9, preferably 0.1 - 2.5, more preferably 0.2 - 1.5, particularly preferably 0.3 - 1.25.

5. Aqueous solution according to any of the preceding claims, **characterized in that** the solution is stable in a temperature range of 0 °C - 80 °C and is stable in storage in particular at a temperature of < 30 °C, preferably < 20 °C, particularly preferably < 10 °C for a period of > one month, preferably > 6 months, particularly preferably > 12 months.

6. Aqueous solution according to any of the preceding claims, **characterized in that** (3A-x•A-M•y•A-z•A) is > 0.

7. Method for creating an aqueous solution according to any of the claims 1 to 6,
wherein the solution comprises aluminum ions in a proportion of 1.5 % - 15 % by weight (converted, if necessary, to Al³⁺) based on the total mass of the solution, as well as anions of lactic acid (lactate ions) and of phosphoric acid (phosphate ions), wherein the molar proportion of the lactate ions is in the range of 0.01 - 2.99 times the molar proportion of Al³⁺ and the molar proportion of phosphate ions is in the range of 0.01 - 2.99 times the molar proportion of Al³⁺, **characterized by** the steps:
a) providing of water in a reaction vessel;
b) addition into the reaction vessel of a basic aluminum salt, preferably selected from a group containing Al carbonate, Al hydroxide, Al oxide, an aluminate or combinations thereof, while stirring;
c) addition of lactic acid and/or a lactate and, parallel to this or offset in time from it, of phosphoric acid and/or of a phosphate;
d) stirring the resulting mixture,
wherein the sequence for performing the steps b) and c) is discretionary.

8. Method according to claim 7, **characterized in that** clusters of the theoretical compound Al³⁺A(C₃H₅O₃⁻)_{x•A}S^{M-}_{y•A}(H₂PO₄⁻)_{z•A}(OH)⁻_{(3A-x•A-M•y•A-z•A)} are created, wherein S is the anion of the optionally present third acid with the charge M, x is a value in the range of 0.01 - 2.99, preferably 0.5 - 2.8, more preferably 0.75 - 2.0, most preferably 1.0 - 1.5, y is a value in the range of 0 - 2.8, preferably 0 - 2, preferably 0 - 1.25, particularly preferably 0 - 1.0, and z is a value in the range of 0.05 - 2.9, preferably 0.1 - 2.5, more preferably 0.2 - 1.5, particularly preferably 0.3 - 1.25.

9. Method according to claim 7 or 8, **characterized in that** step c) is performed at a temperature > 25 °C, preferably > 40 °C, more preferably > 50 °C, particularly preferably at 60 - 70 °C, or alternatively under reflux.

10. Method according to any of claims 7 - 9, **characterized in that** a filtration follows after step c).

## Revendications

1. Solution aqueuse contenant des ions aluminium, **caractérisée par le fait que** la solution comporte des ions aluminium dans une proportion dans la plage de 1,5 - 15 % en poids (éventuellement convertis en Al³⁺) par rapport à la masse totale de la solution et comporte en outre des anions de l'acide lactique (ions lactate) et de l'acide phosphorique (ions phosphate), la proportion molaire des ions lactate se situant dans la plage de 0,01 - 2,99 fois la proportion molaire en Al³⁺, et la proportion molaire des ions phosphate se situant dans la plage de 0,01 - 2,99 fois la proportion molaire en Al³⁺.

2. Solution aqueuse selon la revendication 1, **caractérisée par le fait que** la solution contient en outre un anion d'au moins un troisième acide, le troisième acide étant de préférence choisi dans un groupe qui comporte les acides aminés, les acides carboxyliques, l'acide citrique, l'acide tartrique, l'acide malique, l'acide oxalique, l'acide glycolique, l'acide succinique, l'acide gluconique, la glycine, l'acide acétique, l'acide sulfurique et/ou les combinaisons de ceux-ci.

3. Solution aqueuse selon l'une des revendications précédentes, **caractérisée par le fait que** la solution contient un additif d'au moins un autre cation, le cation étant choisi dans un groupe qui comporte les ions alcalins, les ions alcalino-terreux, les ions ammonium, les cations d'un ou plusieurs métaux de transition ou des terres rares ou les combinaisons de ceux-ci et, de manière particulièrement préférée, étant choisi dans un groupe qui comporte Na⁺, K⁺, Ca²⁺, Mg²⁺, Zr²⁺, NH⁴⁺ ou les combinaisons de ceux-ci.

4. Solution aqueuse selon l'une des revendications précédentes, **caractérisée par le fait que** la solution présente des clusters qui présentent la composition théorique Al³⁺_{A}(C₃H₅O₃⁻)_{x•A}S^{M-}_{y•A}(H₂PO₄⁻)_{z•A}(OH)⁻_{(3A-x•A-M•y•A-z•A)}, dans laquelle S est l'anion d'un troisième acide facultativement présent ayant la charge M, x est une valeur dans la plage de 0,01 - 2,99, de préférence de 0,5 - 2,8, de façon davantage préférée de 0,75 - 2,0, de la façon que l'on préfère le plus de 1,0 - 1,5, y est une valeur dans la plage de 0 - 2,8, de préférence de 0 - 2, de préférence de 0 - 1,25, de façon particulièrement préférée de 0 - 1,0, et z est une valeur dans la plage de 0,05 - 2,9, de préférence de 0,1 - 2,5, de façon davantage préférée de 0,2 - 1,5, de façon particulièrement préférée de 0,3 - 1,25.

5. Solution aqueuse selon l'une des revendications précédentes, **caractérisée par le fait que** la solution est stable dans une plage de température de 0 °C -80 °C et est stable au stockage en particulier à une température < 30 °C, de préférence < 20 °C, de façon particulièrement préférée < 10 °C sur une période de temps > un mois, de préférence > 6 mois, de façon particulièrement préférée > 12 mois.

6. Solution aqueuse selon l'une des revendications précédentes, **caractérisée par le fait que** (3A-x•A-M•y•A-z•A) est > 0.

7. Procédé de fabrication d'une solution aqueuse, selon l'une des revendications 1 à 6, dans lequel la solution comporte des ions aluminium dans une proportion dans la plage de 1,5 - 15 % en poids (éventuellement convertis en Al³⁺) par rapport à la masse totale de la solution et comporte en outre des anions de l'acide lactique (ions lactate) et de l'acide phosphorique (ions phosphate), la proportion molaire des ions lactate se situant dans la plage de 0,01 - 2,99 fois la proportion molaire en Al³⁺, et la proportion molaire des ions phosphate se situant dans la plage de 0,01 - 2,99 fois la proportion molaire en Al³⁺,
**caractérisé par** les étapes consistant à :
a) apporter de l'eau dans un récipient de réaction ;
b) ajouter sous agitation dans le récipient de réaction un sel d'aluminium basique, lequel est de préférence choisi dans un groupe qui contient le carbonate d'AI, l'hydroxyde d'Al, l'oxyde d'Al, un aluminate ou des combinaisons de ceux-ci ;
c) ajouter de l'acide lactique et/ou un lactate et en parallèle ou de façon décalée dans le temps de l'acide phosphorique et/ou un phosphate ;
d) agiter le mélange obtenu,
les étapes b) et c) étant réalisées dans n'importe quel ordre.

8. Procédé selon la revendication 7, **caractérisé par le fait que** des clusters de la composition théorique Al³⁺_{A}(C₃H₅O₃⁻)_{x•A}S^{M-}_{y•A}(H₂PO₄⁻)_{z•A}(OH)⁻_{(3A-x•A-M•y•A-z•A}) sont obtenus, S étant l'anion d'un troisième acide facultativement présent ayant la charge M, x étant une valeur dans la plage de 0,01 - 2,99, de préférence de 0,5 - 2,8, de façon davantage préférée de 0,75 - 2,0, de la façon que l'on préfère le plus de 1,0 - 1,5, y étant une valeur dans la plage de 0 - 2,8, de préférence de 0 - 2, de préférence de 0 - 1,25, de façon particulièrement préférée de 0 - 1,0, et z étant une valeur dans la plage de 0,05 - 2,9, de préférence de 0,1 - 2,5, de façon davantage préférée de 0,2 - 1,5, de façon particulièrement préférée de 0,3 - 1,25.

9. Procédé selon l'une des revendications 7 ou 8, **caractérisé par le fait que** l'étape c) a lieu à une température > 25 °C, de préférence > 40 °C, de façon davantage préférée > 50 °C, de façon particulièrement préférée à 60 - 70 °C ou, en variante, au reflux.

10. Procédé selon l'une des revendications 7 à 9, **caractérisé par le fait qu'**une filtration fait suite à l'étape c).
